(19) Europäisches Patentamt

European Patent Office

Office européen des brevets

(11) Veröffentlichungsnummer: **0 269 836**
**B1**

(12) **EUROPÄISCHE PATENTSCHRIFT**

(45) Veröffentlichungstag der Patentschrift:
12.09.90

(21) Anmeldenummer: 87115559.4

(22) Anmeldetag: 23.10.87

(51) Int. Cl.⁵: **F16C 11/06**

(54) Befestigung und Vorrichtung zur Befestigung eines Dichtungsbalges am Gelenkgehäuse eines Kugelgelenkes.

(30) Priorität: 01.12.86 DE 3641030

(43) Veröffentlichungstag der Anmeldung:
08.06.88 Patentblatt 88/23

(45) Bekanntmachung des Hinweises auf die Patenterteilung:
12.09.90 Patentblatt 90/37

(84) Benannte Vertragsstaaten:
DE FR GB IT

(56) Entgegenhaltungen:
EP-A- 144 590
DE-B- 1 266 573
DE-B- 1 525 083
DE-B- 2 935 003
GB-A- 973 995
US-A- 2 559 857
US-A- 3 175 834

(73) Patentinhaber: TRW Ehrenreich GmbH & Co. KG,
Hansa-Allee 190, D-4000 Düsseldorf 11(DE)

(72) Erfinder: Schütt, Hans Joachim, Annastrasse 26,
D-5100 Aachen(DE)
Erfinder: Mette, Ulrich, Burgstrasse 9, D-4300 Essen(DE)
Erfinder: Barbet, Karl-Heinz, Novalisstrasse 4,
D-4052 Korschenbroich(DE)
Erfinder: Busse, Fritz, Ludwig-Richter-Weg 29,
D-4010 Hilden(DE)
Erfinder: Blumberg, Willy, Am Eisenbrand 20,
D-4005 Meerbusch(DE)
Erfinder: Klier, Benno, Weberstrasse 2,
D-4005 Meerbusch(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

ACTORUM AG

## Beschreibung

Gegenstand der Erfindung ist eine Befestigung eines Dichtungsbalges am Gelenkgehäuse eines Kugelgelenkes insbesondere eines Kugelgelenkes für Übertragungsgestänge von Kraftfahrzeugen, wobei der Dichtungsbalg mit seinem gehäuseseitigen Balgrand auf einem etwa zylindrischen Balgsitz am äußeren Rand der Gehäuseöffnung aufliegt und von einem den gehäuseseitigen Balgrand umschließenden, einen Bereich geringsten Durchmessers mit einer umlaufenden, radial nach innen gerichtete Einbuchtung aufweisenden Haltering aus Blech dichtend auf den Balgsitz gedrückt wird.

Aus der DE-B 1 525 083 ist ein Dichtungsbalg für die Austrittsöffnung des Gelenkzapfens aus dem Gelenkgehäuse bei Kugelgelenken bekannt, der mit einem angeformten Balgrand in eine umlaufende Ringnut des Gelenkgehäuses eingreift und dort mittels eines Federringes oder einer Drahtschlinge festgelegt ist. Die Verwendung eines Federringes oder einer Drahtschlinge zur Befestigung eines Dichtungsbalges hat jedoch den Nachteil, daß die Montage und Befestigung des Dichtungsbalges besonders aufwendig ist. Es muß nämlich zunächst der Dichtungsbalg über den äußeren Rand der Gehäuseöffnung in die Balgnut gedrückt werden. Dann muß der Federring oder die Drahtschlinge auf den größten Durchmesser des Dichtungsbalges aufgeweitet, über den Dichtungsbalg geschoben und behutsam auf dem Balgrand positioniert werden, damit dieser nicht beschädigt wird. Infolge der ungleichmäßigen Druckverteilung am Innenumfang des Federringes oder der Drahtschlinge ist zum Erreichen einer vollständigen Abdichtung eine besonders hohe Vorspannung erforderlich. In Verbindung mit dem üblicherweise geringen Querschnitt des Federringes oder der Drahtschlinge und deren Scharfkantigkeit kann dies leicht zu einer Beschädigung des Balgrandes führen.

Aus der DE-B 1 266 753 ist es bekannt, einen Dichtungsbalg mit einem Rand in eine in axialer Richjtung offene Ringnut des Gelenkgehäuses einzusetzen, deren Außenwand gegen den Dichtungsbalg eingerollt werden kann. Dabei muß die Ringnut bei der Herstellung des Gelenkgehäuses eingeformt werden. In der Praxis hat sich aber gezeigt, daß das Einrollen der freistehenden Seitenwand der Nut gegen den Rand des Dichtungsbalges äußerst diffizil ist, wenn eine Zerstörung des Dichtungsbalges vermieden werden soll.

Aus der EP-A 0 144 590 ist eine weitere Befestigung eines Dichtungsbalges mit einer in axialer Richtung offenen Ringnut am äußeren Rand der Gehäuseöffnung bekannt, die von einer umlaufenden, im Querschnitt L-förmigen Ausnehmung am Gehäuserand einerseits und durch einen in die Ausnehmung eingesetzten und in dieser befestigten, im Querschnitt entgegengesetzt zur Ausnehmung L-förmigen Haltering andererseits gebildet wird. Die zylindrische Außenwand des Halteringes ist zur Fassung eines Balgwulstes radial nach innen umgebogen. Zur Befestigung des Halteringes sind Vorsprünge aus einer am Boden der Ausnehmung umlaufenden Ringstufe herausgestemmt. Das Verstemmen des Halteringes ist jedoch fertigungstechnisch problematisch, weil dies mit einem präzise arbeitenden, jedoch hochbelasteten Werkzeug erfolgen muß. Darüber hinaus ist das Einrollen der Außenwand des Halteringes ohne Zerstörung des Dichtungsbalges diffizil.

Schließlich ist aus der GB-A 973 995 ein Kugelgelenk bekannt, an dessen Gehäuse ein Dichtungsbalg mit einem Haltering befestigt ist, dessen balgseitiger Rand eingefaltet ist und dadurch eine radial nach innen gerichtete Einbuchtung aufweist.

Davon ausgehend liegt der Erfindung die **Aufgabe** zugrunde, eine verbesserte Befestigung und Vorrichtung zur Befestigung eines Dichtungsbalges am Gelenkgehäuse eines Kugelgelenkes zu schaffen, welche insbesondere eine zuverlässige und gleichmäßige Abdichtung und eine vereinfachte Herstellung ermöglichen.

Zur technischen **Lösung** wird hinsichtlich der Befestigung vorgeschlagen, daß die Einbuchtung des Halteringes vor der Befestigung des Dichtungsbalges nur soweit ausgebildet ist, daß der Haltering über den gehäuseseitigen Balgrand streifbar ist und daß der Haltering zur Befestigung des Dichtungsbalges derart axial zusammengedrückt ist, daß er einen im axialen Breich der Einbuchtung gegenüber dem Vorzustand weiter verringerten Innendurchmesser hat, an dem er den gehäuseseitgen Balgrand dichtend gegen seinen Balgsitz drückt.

Bei einer erfindungsgemäßen Befestigung wird zunächst der Haltering auf den gehäuseseitigen Balgrand des Dichtungsbalges gestreift, wobei der Dichtungsbalg bereits auf seinen gehäuseseitigen Balgsitz aufgeschoben sein kann. Wenn der größte Durchmesser des Dichtungsbalges jedoch den Innendurchmesser des Halteringes vor dessen Befestigung überschreitet, können auch Dichtungsbalg und Haltering vormontiert und gemeinsam auf den Balgsitz des Gelenkgehäuses aufgeschoben werden. Diese Vormontage ist besonders einfach, weil der Innendurchmesser des Halteringes etwa dem Außendurchmesser des gehäuseseitigen Balgrandes und der Innendurchmesser des gehäuseseitigen Balgrandes etwa dem Außendurchmesser des Balgsitzes entsprechen kann.

Zur Befestigung von Haltering und Dichtungsbalg am Gelenkgehäuse wird der Haltering axial zusammengedrückt, wobei sich sein Innendurchmesser insbesondere im Breich der außen umlaufenden Einbuchtung verringert. Die hierzu erforderliche Formänderungsarbeit ist relativ gering, da es sich um einen Haltering aus Blech handelt. Es ist möglich, den Haltering durch ein stirnseitig aufgesetztes hülsenförmiges Preßwerkzeug gleichmäßig axial zusammenzudrücken, wodurch dessen Innendurchmesser gleichmäßig verringert und der Balgrand überall gleichzeitig dichtend gegen den Balgsitz gedrückt wird. Demgegenüber erfolgt das vorbekannte Einbördeln oder Einrollen der Außenwand einer Ringnut in der Regel abschnittsweise, was eine Ungleichverteilung des Materials des Balgrandes in der Ringnut zur Folge haben kann.

Bei einer Ausgestaltung der Erfindung ist die umlaufende Einbuchtung des Halteringes stetig und zu seiner Quermittelebene symmetrisch gewölbt, so daß der Haltering auch nach dem axialen Zusammendrücken mit einer Wölbung gegen den Balgrand drückt und dessen Beschädigung vermieden wird. Durch die symmetrische Wölbung des Halteringes wird zudem dessen gleichmäßige Verformung beim axialen Zusammendrücken begünstigt.

Bei einer weiteren Ausgestaltung ist der axial zusammengedrückte Haltering an seinen Außenrändern außen zu seiner Quermittelebene zurückgestülpt, wobei die Außenränder nahe seiner Quermittelebene stumpf zusammenstoßen. Hierdurch wird zum einen erreicht, daß die Außenränder des eingebuchteten Halteringes nicht nach außen abstehen und bei der Montage oder Reparatur Verletzungen bewirken können. Zum anderen tritt hierdurch auch eine bedeutende Verfestigung des axial zusammengedrückten Halteringes ein, da die nach außen gestülpten Außenränder und angrenzenden Bereiche eine Rückaufweitung des an seinem Innendurchmesser verringerten und unter Spannung stehenden Halteringes verhindern.

Bei einer weiteren Ausgestaltung grenzt an den gehäuseseitigen Balgsitz eine umlaufende Ringstufe zum Abstützen des Halteringes beim axialen Zusammendrücken an. Ohne eine solche Ringstufe muß der Haltering beim axialen Zusammendrücken von einem Haltewerkzeug unterstützt werden.

Hinsichtlich der Vorrichtung wird vorzugsweise, daß diese ein Haltewerkzeug zum Bereitstellen des Kugelgelenkes hat, mit einem auf dem Balgrand positionierten Haltering, der vom Haltewerkzeug oder einer an den Balgrand angrenzenden Ringstufe des Gelenkgehäuses abgestützt wird und ein relativ zu diesem bewegliches Arbeitswerkzeug hat, wobei das Arbeitswerkzeug einen Niederhalter zum Festlegen des Kugelgelenkes auf dem Haltewerkzeug und einen Arbeitsstempel hat, der entgegen der Kraft einer Rückstellfeder relativ zum Niederhalter verschiebbar ist, wobei der Arbeitsstempel mit einer Stirnseite auf dem Haltering aufsetzbar ist, so daß dieser unter weiterem Verschieben des Arbeitsstempels axial zusammendrückbar ist, bei dem Zapfen, Dichtungsbalg und Balgsitz des Kugelgelenkes in einen Hohlraum des Arbeitsstempels eindringen.

Die erfindungsgemäße Vorrichtung stellt also ein Kugelgelenk in einem Haltewerkzeug bereit, zu dem ein Arbeitswerkzeug relativ beweglich ist. Zur Befestigung des Dichtungsbalges legt das Arbeitswerkzeug zunächst das Kugelgelenk mit einem Niederhalter auf dem Haltwerkzeug fest, so daß dieses beim axialen Zusammendrücken des Halteringes nicht verrutschen kann. Dann drückt das Arbeitswerkzeug den Haltering mittels eines gleichmäßig auf der Stirnseite des Halteringes aufsetzbaren Arbeitsstempels zusammen, der wiederum relativ zum Niederhalter verschiebbar ist. Dieser Arbeitsstempel weist einen Hohlraum auf, in den Zapfen, Dichtungsbalg und Balgsitz des Kugelgelenkes zumindest teilweise eindringen. Nach der Befestigung des Dichtungsbalges wird das Arbeitswerkzeug von dem Kugelgelenk abgehoben, wobei Niederhalter und Arbeitsstempel unter der Wirkung der sich entspannenden Rückstellfeder in ihre Ausgangsposition zurückkehren, so daß bei der Bearbeitung eines weiteren Werkstückes zunächst der Niederhalter auf dem Kugelgelenk aufsitzt. Diese Vorrichtung kommt mit nur wenigen Bauelementen aus und hat ein Arbeitswerkzeug, das nur entlang einer Bewegungsachse bewegt werden muß.

Bei einer weiteren Ausgestaltung weist der Niederhalter eine Innenführung auf, in der der Arbeitsstempel relativ zum Niederhalter verschiebbar ist, wobei der Arbeitsstempel mit einem Halteelement in eine beidseitig durch Anschläge begrenzte Ausnehmung des Arbeitsstempels eingreift, welche die Verschiebbarkeit des Arbeitsstempels relativ zum Niederhalter begrenzt, ragt der Arbeitsstempel mit einem Antriebskopf zum Befestigen an einer Antriebsmaschine aus der Innenführung heraus und ist zwischen einer Stützfläche des Antriebskopfes und dem Niederhalter eine Druckfeder zur Erzeugung einer Rückstellkraft angeordnet.

Bei dieser Ausgestaltung ist der Niederhalter also auf den angetriebenen Arbeitsstempel aufgeschoben, wobei ein Abrutschen von einer durch Anschläge begrenzten Ausnehmung verhindert wird. Wenn das Arbeitswerkzeug zum bereitgestellten Kugelgelenk bewegt wird und der Niederhalter mit dem Öffnungsrand der Innenführung auf dem Gelenkgehäuse des Kugelgelenkes aufsitzt, gleitet der Arbeitsstempel in die Innenführung des nunmehr festgelegten Niederhalters um mit einer Stirnseite auf dem in die Innenführung hineinragenden Haltering aufzusetzen und diesen axial zusammenzudrücken. Hierbei wird die als Druckfeder ausgebildete Rückstellfeder zwischen Antriebskopf und Niederhalter vorgespannt, so daß der Niederhalter nach dem Abziehen des Arbeitswerkzeuges vom Kugelgelenk in seine Ausgangsposition zurückgelangt. Wenn das Kugelgelenk mit senkrecht nach oben weisendem Zapfen bereitgestellt wird und die Bewegungsachse des Antriebswerkzeuges in der Senkrechten verläuft, kann die Vorrichtung im Prinzip auch ohne eine Druckfeder betrieben werden, weil der Niederhalter unter der Wirkung der Schwerkraft in seine Ausgangslage zurückfällt.

Bei einer weiteren Ausgestaltung ist vorgesehen, daß der hülsenförmige Niederhalter an der Seite des Antriebskopfes einen nach innen gerichteten Randflansch aufweist, der zwischen einem Absatz des Arbeitsstempels und einer überkragenden Stützfläche den an dem Antriebsstempel befestigten Antriebskopfes verschieblich ist und daß die Druckfeder in der zwischen Randflansch und Stützfläche gebildeten Ausnehmung angeordnet ist. Diese Konstruktion ist besonders robust und einfach.

Schließlich ist bei einer Ausgestaltung der Vorrichtung vorgesehen, daß der Niederhalter mit seiner Innenführung an dem Außenmantel des unverformten Halteringes anliegt, so daß dieser im Bereich der Außenränder zur Quermittelebene zurückstülpbar ist.

Weitere Einzelheiten und Vorteile des Gegenstandes der Erfindung ergeben sich aus der nachfolgenden Beschreibung der zugehörigen Zeichnungen, die eine erfindungsgemäße Befestigung und Vorrichtung zeigen. In den Zeichnungen zeigen:

Fig. 1 Befestigung eines Dichtungsbalges am Gelenkgehäuse eines Kugelgelenkes in der Ansicht;

Fig. 2 dieselbe Befestigung mit abgesprengtem Dichtungsbalg,Haltering, Spannring und abgesprengter Ausschlagbegrenzung in der Ansicht;

Fig. 3 Arbeitswerkzeug einer Vorrichtung zur Befestigung eines Dichtungsbalges am Gelenkgehäuse im Längschnitt.

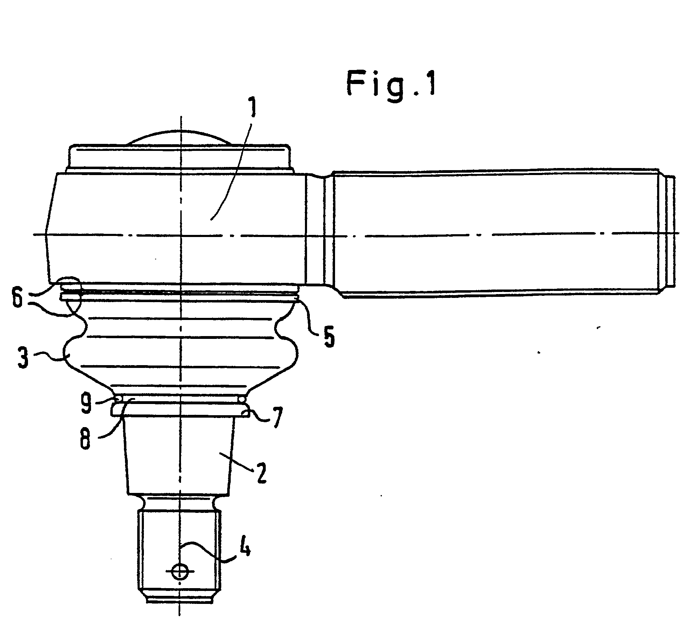

Die Fig. 1 zeigt ein Kugelgelenk mit einem Gelenkgehäuse 1 und einem dreh- bzw. winkelbeweglich in diesem gelagerten Kugelzapfen 2, der aus einer Gehäuseöffnung herausragt, wobei der Spalt zwischen Gehäuseöffnung des Gelenkgehäuses 1 und Kugel zapfen 2 von einem Dichtungsbalg 3 aus einem elastischen Material verschossen ist.

Der Dichtungsbalg 3 ist rotationssymmetrisch zur Zapfenachse 4 und an einem großen, gehäuseseitigen Balgrand mittels eines Halteringes 5 am Gelenkgehäuse 1 festgelegt. Der Haltering 5 hat außen zu seiner Quermittelebene zurückgestülpte Außenränder 6, die nahe seiner Quermittelebene stumpf zusammenstoßen können.

Der Dichtungsbalg 3 hat einen kleinen, zapfenseitigen Balgrand 7, mit dem er an dem Kugelzapfen 2 festgelegt ist, wobei der Kugelzapfen 2 relativ zum Balgrand 7 eine Drehbewegung ausführen kann. Hierzu weist der Balgrand 7 eine umlaufende Nut 8 auf, in die ein Spannring 9 eingesetzt ist.

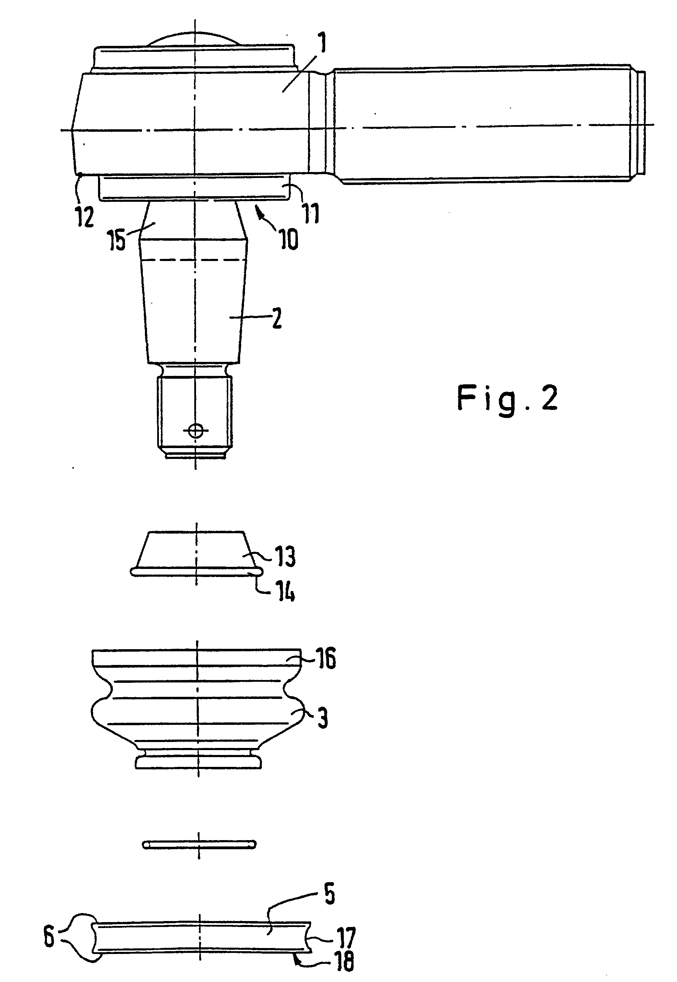

Einzelheiten der Befestigung des Dichtungsbalges 3 am Gelenkgehäuse 1 können besser anhand der Fig. 2 erläutert werden. Das Gelenkgehäuse 1 weist am äußeren Rand eine Gehäuseöffnung 10 für dem Kugelzapfen 2 einen zylindrischen Balgsitz 11 auf. An dem Balgsitz 11 angrenzend hat das Gelenkgehäuse 1 eine umlaufende Ringstufe 12.

Vor der Montage des Dichtungsbalges 3 wird eine Ausschlagbegrenzung 13 aus Kunststoff mit einem Ringwulst 14 zum Abstützen des zapfenseitigen Balgrandes 7 in den Bereich eines Kugelzapfenhalses 15 geschoben.

Dann wird der Dichtungsbalg 3 mit seinem großen, gehäuseseitigen Balgrand 16, der innen und außen etwa kreiszylindrisch geformt ist, auf den ebenfalls kreiszylindrischen Balgsitz 11 aufgeschoben. Der Innendurchmesser des Balgrandes 16 wird vorteilhafterweise so gewählt, daß er unter geringer Vorspannung an dem Balgsitz 11 haftet.

Dann wird ein Haltering 5 über den gehäuseseitigen Balgrand 16 geschoben, bis er einseitig zur Anlage an der Ringstufe 12 kommt. Um das Aufschieben des Halteringes 5 zu erleichtern, kann der Dichtungsbalg 3 so bemessen sein, daß der Außendurchmesser seines Balgrandes 16 mindestens so groß ist, wie der Außendurchmesser seines größten Balgwulstes. Der Haltering 5 kann aber auch vor dem Aufschieben des Balgrandes 16 auf den Balgsitz 11 auf dem Balgrand 16 vormontiert werden.

Der Haltering 5 weist vor seiner Befestigung eine außen umlaufende Einbuchtung 17 auf, die im gezeigten Ausführungsbeispiel stetig und zu seiner Quermittelebene symmetrisch gewölbt ist. Wenn der Haltering 5 auf dem Balgrand 16 und dieser wiederum aufdem Balgsitz 11 vormontiert ist, kann der Haltering 5 an seiner nicht an der Ringstufe 12 anliegenden Stirnseite 18 axial zusammengedrückt werden. Hierzu kann beispielsweise ein kreiszylinderförmiger Arbeitsstempel über den Kugelzapfen 2 und den Dichtungsbalg 3 geschoben und auf der Stirnseite 18 aufgesetzt werden. Es bedarf außerdem noch eines Haltewerkzeuges, um das Kugelgelenk entgegen der Arbeitsrichtung des Arbeitsstempels abzustützen.

Beim axialen Zusammendrücken des Halteringes 5 verringert sich dessen Durchmesser inbesondere im Bereich der Einbuchtung 17, welche die Ausweichrichtung des Materials des Halteringes 5 vorgibt. Dieser wird vorteilhafterweise aus einem relativ dünnen Blech, beispielsweise einem Stahlblech hergestellt. In Betracht kommen auch Halteringe aus Aluminium, Kupfer, Blei oder einem anderen leicht verformbaren metallischen Werkstoff. Die Spannungsverteilung im Haltering 5 und die an seinen Stirnseiten angreifenden Verformungskräfte bewirken, daß dessen Außenränder 6 außen zu seiner Quermittelebene zurückgestülpt werden und schließlich in der in der Fig. 1 gezeigten Weise nahe seiner Quermittelebene stumpf zusammenstoßen oder fast stumpf zusammenstoßen. Hierdurch wird der Haltering 5 in seinem verformten Zustand verfestigt.

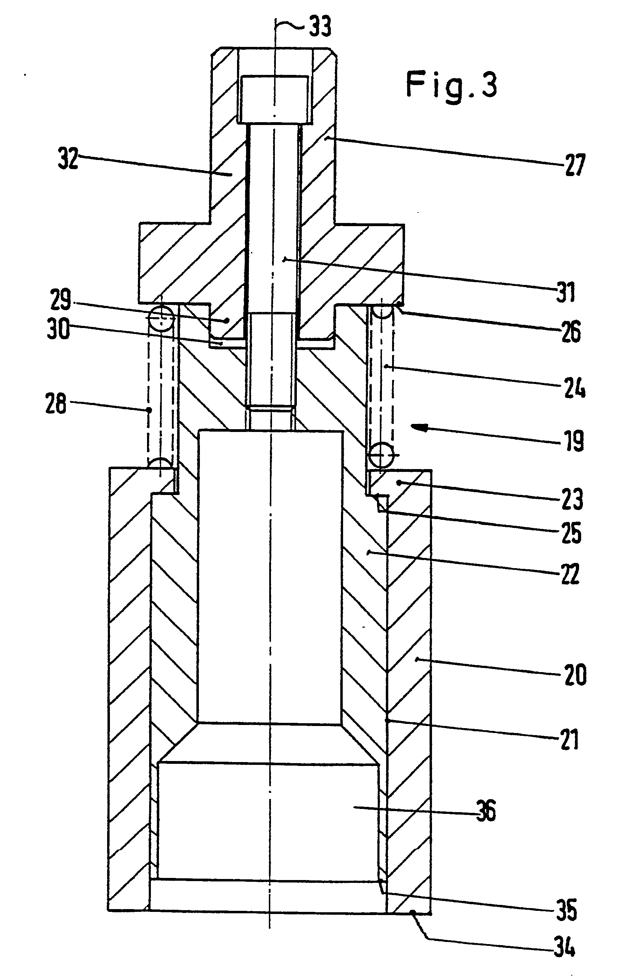

In der Fig. 3 ist ein Arbeitswerkzeug 19 einer erfindungsgemäßen Vorrichtung dargestellt. Das Arbeitswerkzeug hat einen hülsenförmigen Niederhalter 20 mit einer Innenführung 21, in der ein Arbeitsstempel 22 verschiebbar ist. Der Niederhalter 20 weist einen nach innen gerichteten Randflansch 23 auf, der in eine beidseitig durch Anschläge begrenzte Ausnehmung 24 des Arbeitsstempels 22 eingreift.

Die Ausnehmung 24 wird einerseits von einem Abstaz 25 des Arbeitsstempels 22 und andererseits von einer überkragenden Stützfläche 26 eines an dem Arbeitsstempel 22 befestigten Antriebskopfes 27 begrenzt. In die Ausnehmung 24 ist ferner eine am Absatz 25 und der Stützfläche 26 abgestützte Druckfeder 28 eingesetzt, die an ihrem Innenumfang auf dem Außenmantel des Arbeitsstempels 22 geführt ist.

Der Arbeitskopf 27 hat einen zylindrischen Ansatz 29 an dem er in einer Zentrierbohrung 30 des Arbeitsstempels 22 geführt ist. Der Antriebskopf 27 ist mittels einer Zylinderschraube 31 an dem Arbeitsstempel 22 verschraubt. Der Antriebskopf 27 ist außen mit einem weiteren kreiszylindrischen Ansatz 32 zum Befestigen an einer Antriebsvorrichtung versehen.

Das Arbeitswerkzeug 19 ist rotationssymmetrisch um eine Mittelachse 33, welche auch gleichzeitig seine Bewegungsachse ist, aufgebaut.

Das Arbeitswerkzeug 19 wird zum Befestigen eines Dichtungsbalges vorzugsweise entlang einer senkrechten Bewegungsachse verfahren und auf ein Kugelgelenk abgesenkt, welches mit senkrecht nach oben weisendem Kugelzapfen auf einem nicht dargestellten Haltewerkzeug bereitgestellt ist. Dichtungsbalg und Haltering sind bereits auf dem Kugelgelenk vormontiert. Beim Absenken des Arbeitswerkzeuges 19 ist dessen Mittelachse 33 bzw. Bewegungsachse genau auf die Zapfenachse ausgerichtet.

Zunächst sitzt der Niederhalter 20 mit einer an die Innenführung 21 angrenzenden stirnseitigen Standfläche 34 auf der Ringstufe 12 des Gelenkgehäuses 1 auf und fixiert somit das Kugelgelenk an dem Haltewerkzeug. Bei einem weiteren Absenken des Antriebskopfes 27 bewegt sich der Arbeitsstempel 22 relativ zu dem Niederhalter 20 in der Innenführung 21, wobei die Druckfeder 28 vorgespannt wird. Der Abstand einer Stirnseite 35 des Arbeitsstempels 22 von der Standfläche 34 des Niederhalters 20 entspricht, bevor der Arbeitsstempel 22 relativ zum Niederhalter 20 bewegt wird, mindestens der Höhe des Halteringes 5. Der Haltering 5 wird somit erst axial zusammengedrückt, wenn der Niederhalter auf dem Gelenkgehäuse aufsitzt und dieses festlegt.

Kugelzapfen 2, Dichtungsbalg 3 und Balgsitz 11 des nicht dargestellten Kugelgelenkes tauchen zumindest teilweise in einen Hohlraum 36 des Arbeitsstempels 22 ein.

Wenn der Haltering 5 durch Verschieben des Arbeitsstempels 22, in der Innenführung 21 das erforderliche Maß axial zusammengedrückt ist, welches ungefähr der halben Höhe des unverformten Halteringes 5 entspricht, wird die Absenkbewegung des Arbeitswerkzeuges 19 gestoppt und dieses wieder von dem Kugelgelenk abgezogen. Hierbei kehrt der Niederhalter 20 unter dem Einfluß der Druckfeder 28 schnell in seine Ausgangslage zurück, in der der Randflansch 23 auf dem Absatz 25 aufliegt. Dann ist das Arbeitswerkzeug 19 bereit für die Befestigung eines weiteres Halteringes.

Es ist hervorzuheben, daß mit einer erfindungsgemäßen Vorrichtung Halteringe durch einfaches axiales Verschieben des Arbeitswerkzeuges zwischen zwei Umkehrpunkten axial zusammengedrückt werden können.

Bezugszeichenliste

1 Gelenkgehäuse
2 Kugelzapfen
3 Dichtungsbalg
4 Zapfenachse
5 Haltering
6 Außenrand
7 Balgrand (zapfenseitig)
8 Nut
9 Spannring
10 Gehäuseöffnung
11 Balgsitz
12 Ringstufe
13 Ausschlagbegrenzung
14 Ringwulst
15 Kugelzapfenhals
16 Balgrand (gehäuseseitig)
17 Einbuchtung
18 Stirnseite
19 Arbeitswerkzeug
20 Niederhalter
21 Innenführung
22 Arbeitsstempel
23 Randflansch
24 Ausnehmung
25 Absatz
26 Stützfläche
27 Antriebskopf
28 Druckfeder
29 Ansatz
30 Zentrierbohrung
31 Zylinderschraube
32 Ansatz
33 Mittelachse
34 Standfläche
35 Stirnseite
36 Hohlraum

**Patentansprüche**

1. Befestigung eines Dichtungsbalges (3) am Gelenkgehäuse (1) eines Kugelgelenkes, insbesondere eines Kugelgelenkes für Übertragungsgestänge von Kraftfahrzeugen, wobei der Dichtungsbalg (3) mit seinem gehäuseseitigen Balgrand (16) auf einem etwa zylindrischen Balgsitz (11) am äußeren Rand der Gehäuseöffnung (10) aufliegt und von einem den gehäuseseitigen Balgrand (16) umschließenden, einen Bereich geringsten Durchmessers mit einer außen umlaufenden, radial nach innen gerichteten Einbuchtung (17) aufweisenden Haltering (5) aus Blech dichtend auf den Balgsitz (11) gedrückt wird, **dadurch gekennzeichnet,** daß die Einbuchtung (17) des Halteringes (5) vor der Befestigung des Dichtungsbalges (3) nur soweit ausgebildet ist, daß der Haltering (3) über den gehäuseseitigen Balgrand (16) streifbar ist und daß der Haltering (5) zur Befestigung des Dichtungsbalges (3) axial derart zusammengedrückt ist, daß er einen im axialen Bereich der Einbuchtung gegenüber dem Vorzustand weiter verringerten Innendurchmesser hat, an dem er den gehäuseseitigen Balgrand (16) dichtend gegen seinen Balgsitz (11) drückt.

2. Befestigung nach Anspruch 1, dadurch gekennzeichnet, daß die umlaufende Einbuchtung (17) des Halteringes (5) vor der Befestigung stetig und zur Quermittelebene des Halteringes (5) symmetrisch gewölbt ist.

3. Befestigung nach einem der Ansprüche 1 oder 2, dadurch gekennzeichnet, daß der axial zusammengedrückte Haltering (5) an seinen Außenrändern (6) außen zu seiner Quermittelebene zurückgestülpt ist, wobei die Außenränder (6) nahe seiner Quermittelebene stumpf zusammenstoßen.

4. Befestigung nach einem der Ansprüche 1 bis 3, dadurch gekennzeichnet, daß an den gehäuseseitigen Balgsitz (11) eine umlaufende Ringstufe (12) zum Abstützten des Halteringes (5) beim axialen Zusammendrücken angrenzt.

5. Vorrichtung zur Befestigung eines Dichtungsbalges (3) am Gelenkgehäuse (1) eines Kugelgelenkes nach einem der Ansprüche 1 bis 4, **gekennzeichnet durch,**
a) ein Haltewerkzeug zum Bereitstellen des Kugelgelenkes mit einem auf dem gehäuseseitigen Balgrand (16) positionierten Haltering (5), der vom Haltewerkzeug oder einer an den Balgrand (16) angrenzenden Ringstufe (12) des Gelenkgehäuses (1) abgestützt wird und

b) ein relativ zu diesem bewegliches Arbeitswerkzeug (19),

aa) wobei das Arbeitswerkzeug (19) einen Niederhalter (20) zum Festlegen des Kugelgelenkes auf dem Halterwerkzeug und

bb) einen Arbeitsstempel (22) hat, der entgegen der Kraft einer Rückstellfeder relativ zum Niederhalter (20) verschiebbar ist, wobei der Arbeitsstempel mit einer Stirnseite (35) auf dem Haltering (5) aufsetzbar ist, so daß dieser unter weiterem Verschieben des Arbeitsstempels (22) axial zusammendrückbar ist, wobei Kugelzapfen (2), Dichtungsbalg (3) und Balgsitz (11) des Kugelgelenkes zumindest teilweise in einen Hohlraum (36) des Arbeitsstempels (22) eindringen.

6. Vorrichtung nach Anspruch 5, dadurch gekennzeichnet, daß der Niederhalter (20) eine Innenführung (21) aufweist, in der der Arbeitsstempel (22) relativ zum Niederhalter (20) verschiebbar ist, wobei der Arbeitsstempel (22) mit einem Halteelement in eine beidseitig durch Anschläge begrenzte Ausnehmung (24) des Arbeitsstempels (22) eingreift, welche die Verschiebbarkeit des Arbeitsstempels (22) relativ zum Niederhalter (20) begrenzt,

daß der Arbeitsstempel (22) mit einem Antriebskopf (27) zum Befestigen an einer Antriebsmaschine aus der Innenführung (21) herausragt und

daß zwischen einer Stützfläche (26) des Antriebskopfes (27) und dem Niederhalter (20) eine Druckfeder (28) zum Erzeugen einer Rückstellkraft angeordnet ist.

7. Vorrichtung nach Anspruch 6, dadurch gekennzeichnet, daß der Niederhalter (20) hülsenförmig ist und an der Seite des Antriebskopfes (27) einen nach innen gerichteten Randflansch (22) aufweist, der zwischen einem Absatz (25) des Arbeitsstempels (22) und der überkragenden Stützfläche (26) des an dem Arbeitsstempel (22) befestigten Antriebskopfes (27) verschiebbar ist und daß die Druckfeder (28) in der zwischen Randflansch (23) und Stützfläche (26) gebildeten Ausnehmung (24) angeordnet ist.

8. Vorrichtung nach einem der Ansprüche 6 bis 7, dadurch gekennzeichnet, daß der Niederhalter (20) mit seiner Innenführung (21) an dem Außenmantel des unverformten Halteringes (5) anliegt.

**Revendications**

1. Fixation d'un soufflet d'étanchéité (3) sur le boîtier d'articulation (1) d'un joint à rotule, en particulier d'un joint à rotule pour tringlerie de transmission de véhicules automobiles, dans laquelle le soufflet d'étanchéité (3) repose, par son bord de soufflet (16) côté boîtier, sur un siège de soufflet (11) à peu près cylindrique, sur le bord extérieur de l'ouverture (10) du boîtier, et est pressé, de manière étanche, sur le siège de soufflet (11) par une bague de fixation (5) en tôle entourant le bord de soufflet (16) côté boîtier et présentant une région de très petit diamètre avec un enfoncement (17) extérieur continu, dirigé radialement vers l'intérieur, caractérisée en ce que l'enfoncement (17) de la bague de fixation (5) n'est formé, avant la fixation du soufflet d'étanchéité (3), que de manière suffisante pour que la bague de fixation (5) puisse être enfilée sur le bord de soufflet (16) côté boîtier et en ce que la bague de fixation (5) est comprimée axialement pour la fixation du soufflet d'étanchéité (3); de manière que son diamètre intérieur soit encore réduit par rapport à l'état précédent, dans la région axiale de l'enfoncement, contre laquelle elle presse le bord de soufflet 16 côté boîtier, de manière étanche, contre son siège de soufflet (11).

2. Fixation selon la revendication 1, caractérisée en ce que l'enfoncement (17) continu de la bague de fixation (5) est constamment cintré avant la fixation et de manière symétrique par rapport au plan médian transversal de la bague de fixation (5).

3. Fixation selon la revendication 1 ou 2, caractérisée en ce que la bague de fixation (5), comprimée axialement, est retournée vers l'extérieur, par rapport à son plan médian transversal, sur ses bords extérieurs (6) qui se rejoignent bout à bout, à proximité de son plan médian transversal.

4. Fixation selon l'une quelconque des revendications 1 à 3, caractérisée en ce qu'un palier annulaire (12) continu, destiné à soutenir la bague de fixation (5) lors de la compression axiale, est adjacent au siège de soufflet (11) côté boîtier.

5. Dispositif de fixation d'un soufflet d'étanchéité (3) sur le boîtier d'articulation (1) d'un joint à rotule selon l'une quelconque des revendications 1 à 4, caractérisé par,

a) un outil de fixation pour positionner le joint à rotule avec une bague de fixation (5) placée sur le bord de soufflet (16) côté boîtier, laquelle bague prend appui contre l'outil de fixation ou contre un palier annulaire (12) du boîtier d'articulation (1), adjacent au bord de soufflet (16) et

b) un outil de travail (19) mobile par rapport au premier,

aa) l'outil de travail (19) présentant un organe presseur (20) pour fixer le joint à rotule sur l'outil de fixation et

bb) un poinçon de travail (22) qui est déplaçable, à l'encontre d'un ressort de rappel, par rapport à l'organe presseur (20), le poinçon de travail s'appliquant, par une face frontale (35), sur la bague de fixation (5), de manière que celle-ci soit comprimée axialement, lorsqu'on continue de déplacer le poinçon de travail (22), le pivot de rotule (2), le soufflet d'étanchéité (3) et le siège de soufflet (11) du joint à rotule pénétrant au moins partiellement dans une cavité (36) du poinçon de travail (22).

6. Dispositif selon la revendication 5, caractérisé en ce que l'organe presseur (20) présente un organe de guidage intérieur (21) dans lequel le poinçon de travail (22) est déplaçable par rapport à l'organe presseur (20), le poinçon de travail (22) s'engageant, par un élément de fixation, dans un évidement (24) du poinçon de travail (22), délimité des deux côtés par des butées et limitant le déplacement du poinçon de travail (22) par rapport à l'organe presseur (20), en ce que le poinçon de travail (22) ressort de l'organe de guidage intérieur (21), par une tête d'entraînement (27), en vue de sa fixation sur une machine d'entraînement et en ce qu'on place entre une surface d'appui (26) de la tête d'entraînement (27) et l'organe presseur (20), un ressort de pression (28) pour produire une force de rappel.

7. Dispositif selon la revendication 6, caractérisé en ce que l'organe presseur (20) est en forme de douille et présente, sur le côté de la tête d'entraînement (27), une bride de bordure (23), dirigée vers l'intérieur, qui est déplaçable entre un décrochement (25) du poinçon de travail (22) et une surface d'appui (26) en porte-à-faux. de la tête d'entraînement (27), fixée sur le poinçon de travail (22), et en ce que le ressort de pression (28) est placé dans l'évidement (24), formé entre la bride de bordure (23) et la surface d'appui (26).

8. Dispositif selon la revendication 6 ou 7, caractérisé en ce que l'organe presseur (20) s'applique, par son organe de guidage intérieur (21), contre l'enveloppe extérieure de la bague de fixation (5) non déformée.

**Claims**

1. Attachment of a sealing bellows (3) on the joint housing (1) of a ball joint, in particular of a ball joint for transmission linkages of motor vehicles, the sealing bellows (3) resting with its housing-side edge (16) on an approximately cylindrical seat (11) on the outer edge of the housing opening (10) and being pressed onto the seat (11) in a sealing manner by a holding ring (5), made of metal sheet, surrounding the housing-side edge (16) and having a region of the smallest diameter having a circumferential recess (17) on the outside aligned radially inwards, characterized in that the recess (17) of the holding ring (5) is constructed before the attachment of the sealing bellows (3) only to the extent that the holding ring (5) can be scraped over the housing-side edge (16), and in that the holding ring (5) for the attachment of the sealing bellows (3) is compressed axially in such a way that it has a further reduced inside diameter in the axial region of the recess in relation to the previous state, at which inside diameter it presses the housing-side edge (16) against its seat (11) in a sealing manner.

2. Attachment according to Claim 1, characterized in that the circumferential recess (17) of the holding ring (5) is constant before the attachment and is symmetrically curved towards the transverse centre plane of the holding ring (5).

3. Attachment according to one of Claims 1 or 2, characterized in that the axially compressed holding ring (5) is folded back at its outer edges (6) on the outside towards its transverse centre plane, the outer edges (6) adjoining flush near to its transverse centre plane.

4. Attachment according to one of Claims 1 to 3, characterized in that a circumferential annular step (12) adjoins the housing-side seat (11) to support the holding ring (5) during the axial compression.

5. Apparatus for the attachment of a sealing bellows (3) to the joint housing (1) of a ball joint according to one of Claims 1 to 4, characterized by

a) a holding tool for the provision of the ball joint having a holding ring (5) positioned on the housing-side edge (16), which holding ring is supported by the holding tool or an annular step (12) of the joint housing (1) adjoining the edge (16) and

b) an operation tool (19), which is movable in relation to said holding tool,

aa) the operation tool (19) having a holding-down clamp (20) to fix the ball joint on the holding tool and

bb) an operation plunger (22), which can be displaced in relation to the holding-down clamp (20) against the force of a resetting spring, in which case the operation plunger can be placed with one end face (35) on top of the holding ring (5) such that the latter can be axially compressed during further displacement of the operation plunger (22), the ball pivot (2), sealing bellows (3) and seat (11) of the ball joint penetrating at least partially into a cavity (36) of the operation plunger (22).

6. Apparatus according to Claim 5, characterized in that the holding-down clamp (20) has an inner guide (21) in which the operation plunger (22) can be displaced in relation to the holding-down clamp (20), the operation plunger (22) engaging with a holding element in a recess (24) of the operation plunger (22), which recess is bounded on both sides by stops and bounds the displaceability of the operation plunger (22) in relation to the holding-down clamp (20), in that the operation plunger (22) projects out of the inner guide (21) with a drive head (27) for attachment to a drive machine, and in that a compression spring (28) to generate a resetting force is arranged between a support surface (26) of the drive head (27) and the holding-down clamp (20).

7. Apparatus according to Claim 6, characterized in that the holding-down clamp (20) is sleeve shaped and has an inwardly aligned edge flange (23) on the side of the drive head (27), which edge flange can be displaced between a shoulder (25) of the operation plunger (22) and a protruding support surface (26) of the drive head (27) attached to the operation plunger (22), and in that the compression spring (28) is arranged in the recess (24) formed between the edge flange (23) and the support surface (26).

8. Apparatus according to one of Claims 6 or 7, characterized in that the holding-down clamp (20) rests with its inner guide (21) on the outer jacket of the undeformed holding ring (5).

EP 0 269 836 B1

Fig.1

Fig. 2

Fig.3